# EUROPEAN PATENT SPECIFICATION

(11) **EP 1 769 056 B1**
(45) Date of publication and mention of the grant of the patent: **09.08.2017**
(21) Application number: 05752084.3
(22) Date of filing: 19.05.2005
(51) Int. Cl.: C10G 9/00

(54) **STEAM CRACKING OF LIGHT HYDROCARBON FEEDSTOCKS CONTAINING NON-VOLATILE COMPONENTS AND/OR COKE PRECURSORS**
STEAMCRACKEN VON NICHTFLÜCHTIGE KOMPONENTEN UND/ODER KOKSVORLÄUFER ENTHALTENDEN KOHLENWASSERSTOFF-EINSATZSTOFFEN
VAPOCRAQUAGE DE CHARGES D'HYDROCARBURES LEGERS CONTENANT DES COMPOSANTS NON VOLATILES ET/OU DES PRECURSEURS DE COKE

(30) Priority: 21.05.2004 US 851500; 21.05.2004 US 851486; 21.05.2004 US 851546; 21.05.2004 US 851878; 21.05.2004 US 851494; 21.05.2004 US 851487; 21.05.2004 US 851434; 21.05.2004 US 851495; 21.05.2004 US 851730; 21.05.2004 US 573474 P; 14.07.2004 US 891795; 14.07.2004 US 891981; 16.07.2004 US 893716; 28.10.2004 US 975703; 10.12.2004 US 9661
(43) Date of publication of application: 04.04.2007
(73) Proprietor: ExxonMobil Chemical Patents Inc., Baytown, TX 77520 (US)
(72) Inventor: BEATTIE, David, C., Perth PH2 7AE Perth and Kinross (GB); STELL, Richard, C., Houston, TX 77062 (US); SRIVASTAVA, Alok, Houston, TX 77062 (US); MCCOY, James, N., Houston, TX 77023 (US)
(74) Representative: ExxonMobil Chemical Europe Inc.
(86) International application number: PCT/US2005/017696
(87) International publication number: WO 2005/113722

(56) References cited:
- US-A- 3 718 709
- US-A1- 2004 004 022

## Description

### FIELD OF THE INVENTION

The present invention relates to the steam cracking of light hydrocarbon feedstocks that contain relatively non-volatile components and/or coke precursors.

### BACKGROUND OF THE INVENTION

Steam cracking, also referred to as pyrolysis, has long been used to crack various hydrocarbon feedstocks into olefins, preferably light olefins such as ethylene, propylene, and butenes. Conventional steam cracking utilizes a pyrolysis furnace which has two main sections: a convection section and a radiant section. The hydrocarbon feedstock typically enters the convection section of the furnace as a liquid (except for light low molecular weight feedstocks which enter as a vapor) wherein it is typically heated and vaporized by indirect contact with hot flue gas from the radiant section and, to a lesser extent, by direct contact with steam. The vaporized feedstock and steam mixture is then introduced into the radiant section where the cracking takes place. The resulting products including olefins leave the pyrolysis furnace for further downstream processing, including quenching.

Pyrolysis involves heating the feedstock sufficiently to cause thermal decomposition of the larger molecules. The pyrolysis process, however, produces molecules which tend to combine to form high molecular weight materials known as tar. Tar is a high-boiling point, viscous, reactive material that can foul equipment under certain conditions. In general, feedstocks containing higher boiling materials tend to produce greater quantities of tar.

The formation of tar after the pyrolysis effluent leaves the steam cracking furnace can be minimized by rapidly reducing the temperature of the effluent exiting the pyrolysis unit to a level at which the tar-forming reactions are greatly slowed. This cooling which may be achieved in one or more steps and using one or more methods is referred to as quenching.

Conventional steam cracking systems have been effective for cracking high-quality feedstock which contain a large fraction of light volatile hydrocarbons, such as gas oil and naphtha. However, steam cracking economics sometimes favor cracking lower cost heavy feedstocks such as, by way of non-limiting examples, crude oil, and atmospheric residue. Crude oil and atmospheric residue often contain high molecular weight, non-volatile components with boiling points in excess of 590°C (1100°F) otherwise known as asphaltenes, bitumen, or resid. The non-volatile components of these feedstocks lay down as coke in the convection section of conventional pyrolysis furnaces. Only very low levels of non-volatile components can be tolerated in the convection section downstream of the point where the lighter components have fully vaporized.

In most commercial naphtha and gas oil crackers, cooling of the effluent from the cracking furnace is normally achieved using a system of transfer line heat exchangers, a primary fractionator, and a water quench tower or indirect condenser. The steam generated in transfer line exchangers can be used to drive large steam turbines which power the major compressors used elsewhere in the ethylene production unit.

To address coking problems, U.S. Patent 3,617,493 discloses the use of an external vaporization drum for the crude oil feed and discloses the use of a first flash to remove naphtha as vapor and a second flash to remove vapors with a boiling point between 450 and 1100°F (230 and 590°C). The vapors are cracked in the pyrolysis furnace into olefins and the separated liquids from the two flash tanks are removed, stripped with steam, and used as fuel.

U.S. Patent 3,718,709. It describes preheating of heavy feedstock inside or outside a pyrolysis furnace to vaporize about 50% of the heavy feedstock with superheated steam and the removal of the residual, separated liquid. The vaporized hydrocarbons, which contain mostly light volatile hydrocarbons, are subjected to cracking.

U.S. Patent 5,190,634 discloses a process for inhibiting coke formation in a furnace by preheating the feedstock in the presence of a small, critical amount of hydrogen in the convection section. The presence of hydrogen in the convection section inhibits the polymerization reaction of the hydrocarbons thereby inhibiting coke formation.

U.S. Patent 5,580,443 discloses a process wherein the feedstock is first preheated and then withdrawn from a preheater in the convection section of the pyrolysis furnace. This preheated feedstock is then mixed with a predetermined amount of steam (the dilution steam) and is then introduced into a gas-liquid separator to separate and remove a required proportion of the non-volatiles as liquid from the separator. The separated vapor from the gas-liquid separator is returned to the pyrolysis furnace for heating and cracking.

US 2004/0004022 describes a process for cracking heavy hydrocarbon feedstock which mixes heavy hydrocarbon feedstock with a fluid, e.g., hydrocarbon or water, to form a mixture stream which is flashed to form a vapor phase and a liquid phase, the vapor phase being subsequently cracked to provide olefins. The amount of fluid mixed with the feedstock is varied in accordance with a selected operating parameter of the process, e.g., temperature of the mixture stream before the mixture stream is flashed, the pressure of the flash, the flow rate of the mixture stream, and/or the excess oxygen in the flue gas of the furnace.

In some instances desirable hydrocarbon feedstocks such as naphthas or condensates are contaminated with non-volatile components and/or coke precursors. This contamination could occur through contact with crude or heavy hydrocarbon residue in shipping and storage equipment. It would be inefficient and expensive to re-process these feedstocks to remove the contamination, but the contamination would result in coking in any of the processes described above.

It has now surprisingly been found that the addition of a heavy hydrocarbon feedstock to the contaminated light hydrocarbon feedstock can reduce or almost eliminate the formation of coke upstream of the flash/separation vessel and/or increase the percentage of a contaminated light hydrocarbon feedstock stream available for cracking.

### SUMMARY OF THE INVENTION

The present invention relates to a process for cracking a light hydrocarbon feedstock containing non-volatile components and/or coke precursors. The process provides a process for cracking a light hydrocarbon feedstock contaminated with non-volatile components and/or coke precursors, said process comprising:
(a) adding a heavy hydrocarbon feedstock of higher T₅₀ boiling point to the contaminated light hydrocarbon feedstock to form a contaminated hydrocarbon feedstock blend wherein said heavy hydrocarbon feedstock increases the T₉₈ of the contaminated hydrocarbon feedstock blend by at least 28°C (50°F) from the T₉₈ of the contaminated light hydrocarbon feedstock;
(b) heating the contaminated hydrocarbon feedstock blend;
(c) feeding the contaminated hydrocarbon feedstock blend to a flash/separation vessel;
(d) separating the contaminated hydrocarbon feedstock blend into a non-volatile component and coke precursor depleted vapor phase and a liquid phase rich in non-volatile components and/or coke precursors;
(e) removing the vapor phase from the flash/separation vessel; and
(f) cracking the vapor phase in a radiant section of a pyrolysis furnace to produce an effluent comprising olefins, the pyrolysis furnace comprising a radiant section and a convection section. Steam, which may optionally comprise sour or treated process steam and may optionally be superheated, may be added at any step or steps in the process prior to cracking the vapor phase.

The addition of heavy hydrocarbon feedstock reduces the coking rate in and upstream of said flash/separation vessel and/or increases the percentage
of the light hydrocarbon available in the vapor phase for cracking as compared to using a feedstock comprising only the contaminated light hydrocarbon feedstock containing non-volatile components and/or coke precursors. The addition of heavy hydrocarbon feedstock increases the T₉₈ of the contaminated hydrocarbon feedstock blend by at least 28°C (50°F) from the T₉₈ of the contaminated light hydrocarbon feedstock, for example by at least 56°C (100°F). Preferably the addition of heavy hydrocarbon feedstock also increases the T₉₅ of the contaminated hydrocarbon feedstock blend by at least 14°C (25°F) from the T₉₅ of the contaminated light hydrocarbon feedstock, for example by at least 28°C (50°F).

The heavy hydrocarbon feedstock generally comprises between 2 wt.% and 75 wt.% of the contaminated hydrocarbon feedstock blend, for example between 5 wt.% and 60 wt.% of the contaminated hydrocarbon feedstock blend, such as between 10 wt.% and 50 wt.% of the contaminated hydrocarbon feedstock blend.

Preferably, the contaminated hydrocarbon feedstock blend with non-volatile components and/or coke precursors is heated by indirect contact with flue gas in a first convection section tube bank of the pyrolysis furnace, for example to 150 to 340°C (300 to 650°F), before optionally mixing with a primary dilution steam stream. The contaminated hydrocarbon feedstock blend may also be mixed with a fluid, such as hydrocarbon or water, in addition to the primary dilution steam stream. The preferred fluid is water.

The contaminated hydrocarbon feedstock blend may be further heated by indirect contact with flue gas in a second convection section tube bank of the pyrolysis furnace before being flashed. Preferably, the temperature of the contaminated hydrocarbon feedstock blend in step (c) is from 205 to 560°C (400 to 1040°F). Preferably the separation in step (d) is at a pressure of from 275 to 1380 kPa (40 to 200 psia).

Generally, 50 to 98 percent of the contaminated hydrocarbon feedstock blend is in the vapor phase after being flashed. Additionally, steam may be added to the vapor phase in the top portion of the flash/separation vessel or downstream of the flash/separation vessel.

If desired, the vapor phase may be sent through an additional separation step to remove trace amounts of liquid before step (f). The preferred vapor phase temperature entering the radiant section of the pyrolysis furnace is from 425 to 705°C (800 to 1300°F), which may optionally be attained by additional heating in a convection section tube bank, preferably the bank nearest the radiant section of the furnace.

### BRIEF DESCRIPTION OF THE DRAWING

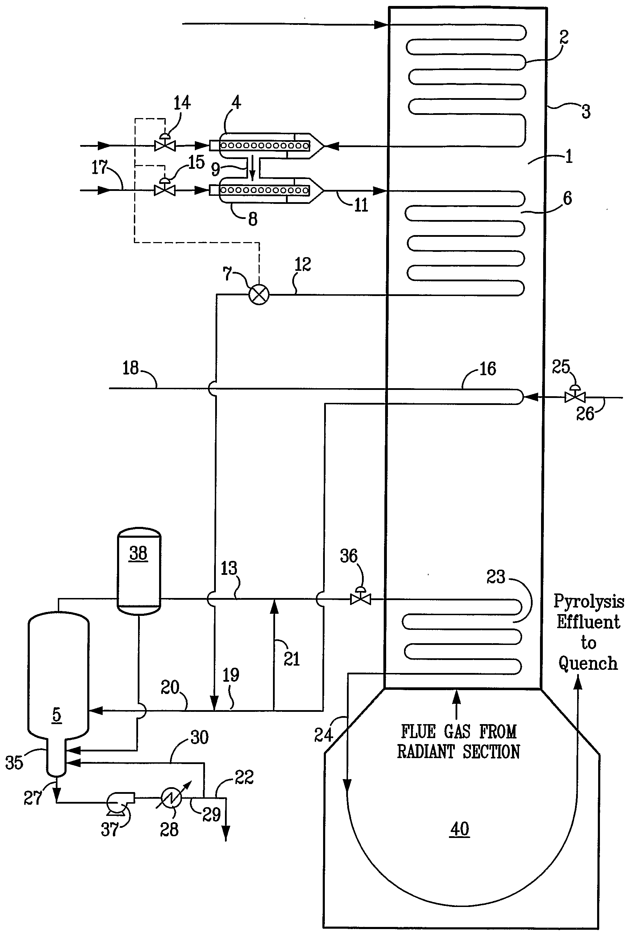

Figure 1 illustrates a schematic flow diagram of the overall process and apparatus in accordance with the present invention employed with a pyrolysis furnace.

### DETAILED DESCRIPTION OF THE INVENTION

Unless otherwise stated, all percentages, parts, ratios, etc., are by weight. Unless otherwise stated, a reference to a compound or component includes the compound or component by itself, as well as in combination with other compounds or components, such as mixtures of compounds.

Further, when an amount, concentration, or other value or parameter is given as a list of upper preferable values and lower preferable values, this is to be understood as specifically disclosing all ranges formed from any pair of an upper preferred value and a lower preferred value, regardless of whether ranges are separately disclosed.

As used herein, non-volatile components are the fraction of a hydrocarbon stream with a nominal boiling point above 590°C (1100°F) as measured by ASTM D-6352-98 or D-2887. This invention works very well with non-volatile components having a nominal boiling point above 760°C (1400°F). The boiling point distribution of the hydrocarbon stream is measured by Gas Chromatograph Distillation (GCD) according to the methods described in ASTM D-6352-98 or D-2887, extended by extrapolation for materials boiling above 700°C (1292°F). Non-volatile components can include coke precursors, which are moderately heavy and/or reactive molecules, such as multi-ring aromatic compounds, which can condense from the vapor phase and then form coke under the operating conditions encountered in the present process of the invention. T₅₀ as used herein shall mean the temperature, determined according to the boiling point distribution described above, at which 50 weight percent of a particular sample has reached its boiling point. Likewise T₉₅ or T₉₈ mean the temperature at which 95 or 98 weight percent of a particular sample has reached its boiling point. Nominal final boiling point shall mean the temperature at which 99.5 weight percent of a particular sample has reached its boiling point.

The light hydrocarbon feedstock for use in the present invention typically comprises one or more of gas oils, heating oil, jet fuel, diesel, kerosene, gasoline, coker naphtha, steam cracked naphtha, catalytically cracked naphtha, hydrocrackate, reformate, raffinate reformate, Fischer-Tropsch liquids, Fischer-Tropsch gases, natural gasoline, distillate, virgin naphtha, wide boiling range naphtha to gas oil condensates, and heavy gas oil; and further comprises non-volatile components and/or coke precursors.

The heavy hydrocarbon feedstock for use with the present invention typically comprises one or more of steam cracked gas oil and residues, crude oil, atmospheric pipestill bottoms, vacuum pipestill streams including bottoms, heavy non-virgin hydrocarbon streams from refineries, vacuum gas oils, low sulfur waxy residue, atmospheric residue, and heavy residue. One preferred heavy hydrocarbon feedstock is an economically advantaged, minimally processed heavy hydrocarbon stream containing non-volatile hydrocarbons and/or coke precursors. Another preferred heavy hydrocarbon feedstock for use in this invention is an atmospheric pipestill bottoms stream.

The heavy hydrocarbon feedstock has a higher T₅₀ boiling point than the light hydrocarbon feedstock, but may have a nominal final boiling point below, equal to, or greater than the nominal final boiling point of the light hydrocarbon feedstock. Likewise the initial boiling point of the heavy hydrocarbon feedstock may be lower than, equal to, or greater than the initial boiling point of the light hydrocarbon feedstock, but will generally be at least 56°C (100°F) higher, more typically at least 280°C (500°F), and often more than 390°C (700°F) higher.

Preferably, the addition of the heavy hydrocarbon feedstock will result in a contaminated hydrocarbon feedstock blend with a T₉₈ boiling point at least 28°C (50°F) higher than the T₉₈ boiling point of the light hydrocarbon feedstock, for example at least 56°C (100°F) higher, as a further example at least 111°C (200°F) higher, and as yet another example at least 167°C (300°F) higher. Preferably, the addition of the heavy hydrocarbon feedstock will also result in a contaminated hydrocarbon feedstock blend with a T₉₅ boiling point at least 14°C (25°F) higher than the T₉₅ boiling point of the light hydrocarbon feedstock, such as at least 28°C (50°F) for example at least 56°C (100°F) higher, as a further example at least 111°C (200°F) higher, and as yet another example at least 167°C (300°F) higher.

Vapor-liquid equilibrium modeling using computer software, such as PROVISION^{™} by Simulation Sciences Inc., can be used to determine optimal quantities of a given heavy hydrocarbon feedstock for use with a given contaminated light hydrocarbon feedstock.

The present invention relates to a process for heating and steam cracking a light hydrocarbon feedstock containing non-volatile hydrocarbons. The process comprises mixing a heavy hydrocarbon feedstock with a contaminated light hydrocarbon feedstock to form a contaminated hydrocarbon feedstock blend,
heating the contaminated hydrocarbon feedstock blend, flashing the contaminated hydrocarbon feedstock blend to form a vapor phase and a liquid phase, feeding the vapor phase to the radiant section of a pyrolysis furnace, and producing an effluent comprising olefins.

The addition of steam at various points is disclosed elsewhere and will, for simplicity, not be detailed in every description herein. It is further noted that any of the steam added may comprise sour steam or treated process steam and that any of the steam added, whether sour or not, may be superheated. Superheating is preferable when the steam comprises sour steam. Since steam and other fluids may be added at various points, the description herein will use the term "contaminated hydrocarbon feedstock blend" to mean the components of the contaminated light hydrocarbon feedstock and the heavy hydrocarbon feedstock together as they travel through the process regardless of what quantities of steam and other fluids may also be present at any given stage.

When light hydrocarbon feedstock having essentially no non-volatile components and/or coke precursors is cracked, the feed is typically preheated in the upper convection section of a pyrolysis furnace, optionally mixed with steam, and then further preheated in the convection section, where essentially all of the light hydrocarbon feedstock vaporizes forming a vapor phase which is the fed to the radiant section of the furnace for pyrolysis. Contamination of the light hydrocarbon feedstock with non-volatile components and/or coke precursors would, however, result in extensive coke formation in the convection tubes in that process. This concern was partially addressed in U.S. Patent 5,580,443, which discloses a process wherein the feedstock is first preheated, then withdrawn from a preheater in the convection section of the pyrolysis furnace, mixed with a predetermined amount of steam, introduced into a gas-liquid separator to separate and remove a required proportion of the non-volatiles as liquid from the separator. The separated vapor from the gas-liquid separator is returned to the pyrolysis furnace for heating and cracking.

In order to prevent coking in the convection tubes just upstream of the separator and the separator itself due to relatively small volumes of non-volatile components and coke precursors likely to be present as a result of contamination or delivery of off-spec feedstock, the separator must be operated at a temperature sufficiently low to maintain liquid wetted surfaces and a liquid fraction of 2 to 50%. This liquid fraction represents an inefficient use of feedstock as it contains light hydrocarbons that could economically have been cracked to form additional olefins product.

Rather than cracking a contaminated light hydrocarbon feedstock as it is delivered, it has surprisingly been found to be advantageous to blend the contaminated light hydrocarbon feedstock with a quantity of a heavy hydrocarbon feedstock. Multiple synergistic effects can be realized with such a procedure.

It will be recognized that economic considerations would generally favor maximizing the fraction of the feedstock which is in the vapor phase and subsequently cracked. One of the benefits which can be realized by the addition of a heavy hydrocarbon feedstock to the contaminated light hydrocarbon feedstock is an increase in the percentage of the light hydrocarbon feedstock vaporized along with some fraction of the heavy hydrocarbon feedstock while coking is reduced or essentially eliminated. Assuming the contaminants present accounted for less than 0.5% of the light hydrocarbon feedstock, the difference in vaporized volume of light hydrocarbon feedstock could be at least 1%, for example at least 2%, such as at least 5%. The process of the present invention allows the loss of light hydrocarbon, exclusive of contaminants, in the liquid phase leaving a flash/separation vessel to be reduced to negligible quantities. In addition, depending on the heavy hydrocarbon feedstock used, a fraction of the heavy hydrocarbon feedstock will be vaporized and subsequently available for cracking.

The heavy hydrocarbon feedstock added to the contaminated light hydrocarbon feedstock may be from 2 to 75 percent of the resultant contaminated hydrocarbon feedstock blend stream, for example from 5% to 60%, and as a further example from 10% to 50%. The percentage of the heavy hydrocarbon feedstock added to the contaminated light hydrocarbon feedstock will be optimized according to economics and availability of given hydrocarbon streams at any particular time. The quantity of heavy hydrocarbon feedstock added is desirably sufficient to result in a liquid fraction of at least 2% of the total flow into the flash/separation vessel, and generally in the range of 2 to 50%. It is noted that the lighter the heavy hydrocarbon feedstock is relative to the contaminated light hydrocarbon feedstock being used, the more heavy hydrocarbon feedstock will be required for optimal benefit. For example, if the flash/separation vessel were operated at 370°C (700°F), 20% of vacuum residue added to a contaminated condensate might result in 2% liquid phase in the flash/separation vessel and 40% of a lighter atmospheric residue might be required to maintain the liquid phase at greater than 2%.

Depending on tankage available, the heavy hydrocarbon feedstock may be added to the contaminated light hydrocarbon feedstock in the feedstock storage tanks or at any point prior to introduction of the contaminated hydrocarbon feedstock blend to the convection section of the furnace. Preferably, both the heavy hydrocarbon feedstock and the light hydrocarbon feedstock are at a sufficient temperature to ensure flowability of both the heavy hydrocarbon feedstock and the blended feedstock upon mixing.

After blending the heavy hydrocarbon feedstock with a contaminated light hydrocarbon feedstock to produce a contaminated hydrocarbon feedstock blend, the heating of the contaminated hydrocarbon feedstock blend can take any form known by those of ordinary skill in the art. However, it is preferred that the heating comprises indirect contact of the contaminated hydrocarbon feedstock blend in the upper (farthest from the radiant section) convection section tube bank **2** of the furnace **1** with hot flue gases from the radiant section of the furnace. This can be accomplished, by way of non-limiting example, by passing the contaminated hydrocarbon feedstock blend through a bank of heat exchange tubes **2** located within the convection section **3** of the furnace **1**. The heated contaminated hydrocarbon feedstock blend typically has a temperature between 150 and 340°C (300 and 650°F), such as 160 to 230°C (325 to 450°F), for example 170 to 220°C (340 to 425°F).

The heated contaminated hydrocarbon feedstock blend may be mixed with primary dilution steam and, optionally, a fluid which can be a hydrocarbon, preferably liquid but optionally vapor; water; steam; or a mixture thereof. The preferred fluid is water. A source of the fluid can be low pressure boiler feed water. The temperature of the fluid can be below, equal to, or above the temperature of the heated feedstock. In one possible embodiment, the fluid latent heat of vaporization can be used to control the contaminated hydrocarbon feedstock blend temperature entering the flash/separation vessel.

The mixing of the heated contaminated hydrocarbon feedstock blend, primary dilution steam, and the optional fluid can occur inside or outside the pyrolysis furnace **1**, but preferably it occurs outside the furnace. The mixing can be accomplished using any mixing device known within the art. For example, it is possible to use a first sparger **4** of a double sparger assembly **9** for the mixing. The first sparger **4** can avoid or reduce hammering, caused by sudden vaporization of the fluid, upon introduction of the fluid into the heated hydrocarbon feedstock.

The use of steam and or fluid mixed with the contaminated hydrocarbon feedstock blend is optional for high volatility feedstocks such as the light hydrocarbon feedstock used in the process of this invention. It is possible that such feedstocks can be heated in any manner known in the industry, for example in heat exchange tubes **2** located within the convection section **3** of the furnace **1**. The contaminated hydrocarbon feedstock blend could be conveyed to the flash/separation vessel with little or no added steam or fluid.

The primary dilution steam 17 can have a temperature greater than or lower than, or about the same as that of the contaminated hydrocarbon feedstock blend fluid mixture, but preferably the temperature is about the same as that of the mixture. The primary dilution steam may be superheated before being injected into the second sparger **8**.

The mixture stream comprising the heated contaminated hydrocarbon feedstock blend, the fluid, and the optional primary dilution steam stream leaving the second sparger **8** is optionally heated further in the convection section of the pyrolysis furnace **3** before the flash. The heating can be accomplished, by way of non-limiting example, by passing the mixture stream through a bank of heat exchange tubes **6** located within the convection section, usually as a lower part of the first convection section tube bank, of the furnace and thus heated by the hot flue gas from the radiant section of the furnace. The thus-heated contaminated hydrocarbon feedstock blend leaves the convection section as part of a mixture stream **12** to optionally be further mixed with an additional steam stream.

Optionally, the secondary dilution steam stream **18** can be further split into a flash steam stream **19** which is mixed with the hydrocarbon mixture **12** before the flash and a bypass steam stream **21** which bypasses the flash of the hydrocarbon mixture and, instead is mixed with the vapor phase from the flash before the vapor phase is further heated in the lower convection section and then cracked in the radiant section of the furnace. The present invention can operate with all secondary dilution steam **18** used as flash steam **19** with no bypass steam **21**. Alternatively, the present invention can be operated with secondary dilution steam **18** directed to bypass steam **21** with no flash steam **19**. In a preferred embodiment in accordance with the present invention, the ratio of the flash steam stream **19** to bypass steam stream **21** should be preferably 1:20 to 20:1, and most preferably 1:2 to 2:1. In this embodiment, the flash steam **19** is mixed with the hydrocarbon mixture stream **12** to form a flash stream **20** before the flash in flash/separation vessel **5**. Preferably, the secondary dilution steam stream is superheated in a superheater section **16** in the furnace convection before splitting and mixing with the hydrocarbon mixture. The addition of the flash steam stream **19** to the hydrocarbon mixture stream **12** aids the vaporization of less volatile components of the mixture before the flash stream **20** enters the flash/separation vessel **5.**

A second optional fluid can be added to the mixture stream before flashing the mixture stream, the second fluid being a hydrocarbon vapor.

The mixture stream **12** or the flash stream **20** is then flashed, for example in a flash/separation vessel **5**, for separation into two phases: a vapor phase comprising predominantly light hydrocarbon feedstock, volatile hydrocarbons from the heavy hydrocarbon feedstock, and steam and a liquid phase comprising less-volatile hydrocarbons along with a significant fraction of the non-volatile components and/or coke precursors. It is understood that vapor-liquid equilibrium at the operating conditions described herein would result in very small quantities of non-volatile components and/or coke precursors present in the vapor phase. Additionally, and varying with the design of the flash/separation vessel, minute quantities of liquid containing non-volatile components and/or coke precursors could be entrained in the vapor phase. In the process of this invention, these quantities are sufficiently small to allow decoking downstream of the flash/separation vessel on the same schedule as for decoking in the radiant section of the furnace. The vapor phase can be considered to have substantially no non-volatile components or coke precursors when coke buildup in the convection section between the flash/separation vessel is at a sufficiently low rate that decoking is not required any more frequently than decoking of the radiant section is required.

For ease of description herein, the term flash/separation vessel will be used to mean any vessel or vessels used to separate the contaminated hydrocarbon feedstock blend into a vapor phase and at least one liquid phase. It is intended to include fractionation and any other method of separation, for example, but not limited to, drums, distillation towers, and centrifugal separators.

The mixture stream **12** is preferably introduced tangentially to the flash/separation vessel **5** through at least one side inlet located in the side of said vessel. The vapor phase is preferably removed from the flash/separation vessel as an overhead vapor stream **13**. The vapor phase, preferably, is fed back to a convection section tube bank **23** of the furnace, preferably located nearest the radiant section of the furnace, for optional heating and through crossover pipes **24** to the radiant section **40** of the pyrolysis furnace for cracking. The liquid phase of the flashed mixture stream is removed from the flash/separation vessel **5**, preferably as a bottoms stream **27**.

It is preferred to maintain a predetermined constant ratio of vapor to liquid in the flash/separation vessel **5**, but such ratio is difficult to measure and control. As an alternative, temperature of the mixture stream **12** before the flash/separation vessel **5** can be used as an indirect parameter to measure, control, and maintain an approximately constant vapor to liquid ratio in the flash/separation vessel **5**. Ideally, when the mixture stream temperature is higher, more volatile hydrocarbons will be vaporized and become available, as part of the vapor phase, for cracking. However, when the mixture stream temperature is too high, more heavy hydrocarbons, including coke precursors, will be present in the vapor phase and carried over to the convection furnace tubes, eventually coking the tubes. If the mixture stream **12** temperature is too low, resulting in a low ratio of vapor to liquid in the flash/separation vessel **5**, more volatile hydrocarbons will remain in liquid phase and thus will not be available for cracking.

The mixture stream temperature is controlled to maximize recovery or vaporization of volatiles in the feedstock while avoiding excessive coking in the furnace tubes or coking in piping and vessels conveying the mixture from the flash/separation vessel to the furnace **1** via line **13**. The pressure drop across the piping and vessels **13** conveying the mixture to the lower convection section **23**, and the crossover piping **24**, and the temperature rise across the lower convection section **23** may be monitored to detect the onset of coking problems. For instance, if the crossover pressure and process inlet pressure to the lower convection section **23** begin to increase rapidly due to coking, the temperature in the flash/separation vessel **5** and the mixture stream **12** should be reduced. If coking occurs in the lower convection section, the temperature of the flue gas to the higher sections, such as the optional superheater **16**, increases. If a superheater **16** is present, the increased flue gas temperature can be offset in part by adding more desuperheater water **26**.

The selection of the mixture stream **12** temperature is also determined by the composition of the feedstock materials. When the feedstock contains higher amounts of lighter hydrocarbons, the temperature of the mixture stream **12** can be set lower. When the feedstock contains a higher amount of lessor non-volatile hydrocarbons, the temperature of the mixture stream **12** should be set higher.

Typically, the temperature of the mixture stream **12** can be set and controlled at between 205 and 560°C (400 and 1040°F), such as between 370 and 510°C (700 and 950°F), for example between 400 and 480°C (750 and 900°F), and often between 430 and 475°C (810 and 890°F). These values will change with the volatility of the feedstock as discussed above.

Considerations in determining the temperature include the desire to maintain a liquid phase to reduce or eliminate the likelihood of coke formation in the flash/separation vessel and associated piping and on convection tubes upstream of the flash/separation vessel. Typically, at least about 2 percent of the total hydrocarbons are in the liquid phase after being flashed.

It is desirable to maintain a constant temperature for the mixture stream **12** mixing with flash steam **19** and entering the flash/separation vessel to achieve a constant ratio of vapor to liquid in the flash/separation vessel **5**, and to avoid substantial temperature and flash vapor to liquid ratio variations. One possible control arrangement is the use of a control system **7** to automatically control the fluid valve **14** and primary dilution steam valve **15** on the two spargers to maintain a set temperature for the mixture stream **12** before the flash/separation vessel **5**. When the control system **7** detects a drop of temperature of the mixture stream, it will cause the fluid valve **14** to reduce the injection of the fluid into the first sparger **4**. If the temperature of the mixture stream starts to rise, the fluid valve will be opened wider to increase the injection of the fluid into the first sparger **4**.

When the primary dilution steam stream **17** is injected to the second sparger **8**, the temperature control system **7** can also be used to control the primary dilution steam valve **15** to adjust the amount of primary dilution steam stream injected to the second sparger **8**. This further reduces the sharp variation of temperature changes in the flash **5**. When the control system **7** detects a drop of temperature of the mixture stream **12**, it will instruct the primary dilution steam valve **15** to increase the injection of the primary dilution steam stream into the second sparger **8** while valve **14** is closed more. If the temperature starts to rise, the primary dilution steam valve will automatically close more to reduce the primary dilution steam stream injected into the second sparger **8** while valve **14** is opened wider.

In an example embodiment where the fluid is water, the controller varies the amount of water and primary dilution steam to maintain a constant mixture stream temperature **12**, while maintaining a constant ratio of H₂O to feedstock in the mixture **11**. To further avoid sharp variation of the flash temperature, the present invention also preferably utilizes an intermediate desuperheater **25** in the superheating section of the secondary dilution steam in the furnace. This allows the superheater **16** outlet temperature to be controlled at a constant value, independent of furnace load changes, coking extent changes, excess oxygen level changes, and other variables. Normally, this desuperheater **25**
maintains the temperature of the secondary dilution steam between 425 and 590°C (800 and 1100°F), for example between 455 and 540°C (850 and 1000°F), such as between 455 and 510°C (850 and 950°F). The desuperheater can be a control valve and water atomizer nozzle. After partial preheating, the secondary dilution steam exits the convection section and a fine mist of desuperheater water **26** can be added which rapidly vaporizes and reduces the temperature. The steam is preferably then further heated in the convection section. The amount of water added to the superheater can control the temperature of the steam which is mixed with mixture stream **12**.

In addition to maintaining a constant temperature of the mixture stream **12** entering the flash/separation vessel, it is generally also desirable to maintain a constant hydrocarbon partial pressure of the flash stream **20** in order to maintain a constant ratio of vapor to liquid in the flash/separation vessel. By way of examples, the constant hydrocarbon partial pressure can be maintained by maintaining constant flash/separation vessel pressure through the use of control valves **36** on the vapor phase line **13** and by controlling the ratio of steam to contaminated hydrocarbon feedstock blend in stream **20**.

Typically, the hydrocarbon partial pressure of the flash stream in the present invention is set and controlled at between 25 and 175 kPa (4 and 25 psia), such as between 35 and 100 kPa (5 and 15 psia), for example between 40 and 75 kPa (6 and 11 psia).

In one embodiment, the flash is conducted in at least one flash/separation vessel. Typically the flash is a one-stage process with or without reflux. The flash/separation vessel **5** is normally operated at 275 to 1400 kPa (40 to 200 psia) pressure and its temperature is usually the same or slightly lower than the temperature of the flash stream **20** before entering the flash/separation vessel **5**. Typically, the pressure at which the flash/separation vessel operates is 275 to 1400 kPa (40 to 200 psia), for example 600 to 1100 kPa (85 to 155 psia), as a further example 700 to 1000 kPa (105 to 145 psia), and in yet another example, the pressure of the flash/separation vessel can be 700 to 760 kPa (105 to 125 psia). The temperature at which the flash/separation vessel operates, or the temperature of the inlet stream to the flash/separation vessel, is 205 to 560°C (400 to 1040°F), such as 370 to 490°C (700 to 920°F), for example 400 to 480°C (750 to 900°F). Depending on the temperature of the mixture stream **12**, generally 50 to 98% of the mixture stream being flashed is in the vapor phase, such as 70 to 95%.

The flash/separation vessel **5** is generally operated, in one aspect, to minimize the temperature of the liquid phase at the bottom of the vessel because too much heat may cause coking of the non-volatiles in the liquid phase. It may also be helpful to recycle a portion of the externally cooled flash/separation vessel bottoms liquid **30** back to the flash/separation vessel to help cool the newly separated liquid phase at the bottom of the flash/separation vessel **5**. Stream **27** can be conveyed from the bottom of the flash/separation vessel **5** to the cooler **28** via pump **37**. The cooled stream **29** can then be split into a recycle stream **30** and export stream **22**. The temperature of the recycled stream would typically be 260 to 315°C (500 to 600°F), for example 270 to 290°C (520 to 550°F). The amount of recycled stream can be 80 to 250% of the amount of the newly separated bottom liquid inside the flash/separation vessel, such as 90 to 225%, for example 100 to 200%.

The flash is generally also operated, in another aspect, to minimize the liquid retention/holding time in the flash vessel. In one example embodiment, the liquid phase is discharged from the vessel through a small diameter "boot" or cylinder **35** on the bottom of the flash/separation vessel. Typically, the liquid phase retention time in the flash/separation vessel is less than 75 seconds, for example less than 60 seconds, such as less than 30 seconds, and often less than 15 seconds. The shorter the liquid phase retention/holding time in the flash/separation vessel, the less coking occurs in the bottom of the flash/separation vessel.

The vapor phase leaving the flash/separation vessel may contain, for example, 55 to 70% hydrocarbons and 30 to 45% steam. The nominal boiling end point of the vapor phase is normally below 760°C (1400°F), such as below 590°C (1100°F), for example below 565°C (1050°F), and often below 540°C (1000°F). The vapor phase is continuously removed from the flash/separation vessel **5** through an overhead pipe, which optionally conveys the vapor to an optional centrifugal separator **38** to remove trace amounts of entrained and/or condensed liquid. The vapor then typically flows into a manifold that distributes the flow to the convection or radiant section of the furnace.

The vapor phase stream **13** continuously removed from the flash/separation vessel is preferably superheated in the pyrolysis furnace lower convection section **23** to a temperature of, for example, 425 to 705°C (800 to 1300°F) by the flue gas from the radiant section of the furnace. The vapor phase is then introduced to the radiant section of the pyrolysis furnace to be cracked to produce an effluent comprising olefins, including ethylene and other desired light olefins, and byproducts.

The vapor phase stream **13** removed from the flash/separation vessel can optionally be mixed with a bypass steam stream **21** before being introduced into the furnace lower convection section **23**.

Because the process of this invention results in significant removal of the coke- and tar-producing heavier hydrocarbon species (in the liquid phase **27** leaving the flash/separation vessel **5**), it may be possible to utilize a transfer line exchanger for quenching the effluent from the radiant section of the pyrolysis furnace. Among other benefits, this will allow more cost-effective retrofitting of cracking facilities initially designed for lighter (uncontaminated) feeds, such as naphthas, or other liquid feedstocks with end boiling points generally below 315°C (600°F), which have transfer line exchanger quench systems already in place. WO2005/095548 details a design for maximizing the benefits associated with use of a transfer line exchanger in conjunction with a process for cracking hydrocarbon feedstocks comprising non-volatile components.

The location and operating temperature of the flash/separation vessel is selected to provide the maximum possible vapor feed which can be processed without excessive fouling/coking concerns. If the ratio of liquid is too high, valuable feed will be lost and the economics of the operation will be detrimentally affected. If the ratio of liquid is too low, coking precursors from the heavy ends of the hydrocarbon feed stream can enter the high temperature sections of the furnace and cause accelerated coking leading to unacceptably frequent decoking operations.

The percentage of given hydrocarbon feed discharged from the flash/separation vessel as a vapor is a function of the hydrocarbon partial pressure in the flash/separation vessel and of the temperature entering the vessel. The temperature of the contaminated hydrocarbon feedstock blend entering the flash/separation vessel is highly dependent on the flue-gas temperature at that point in the convection section. This temperature will vary as the furnace load is changed, being higher when the furnace is at full load, and lower when the furnace is at partial load. The flue-gas temperature in the first convection section tube bank is also a function of the extent of coking that has occurred in the furnace. When the furnace is clean or lightly coked, heat transfer is improved and the flue-gas temperature at that point is correspondingly cooler than when the furnace is heavily coked. The flue-gas temperature at any point is also a function of the combustion control exercised on the burners of the furnace. When the furnace is
operated with low levels of excess oxygen in the flue-gas the flue-gas temperature at any point will be correspondingly lower than when the furnace is operated with higher levels of excess oxygen in the flue-gas.

Total furnace load is determined by the heat requirements for pyrolysis in the radiant section of the furnace as well as heat requirements in the convection section. Excess oxygen above about 2% is in essence a reflection of extra air volumes being heated in the radiant section of the furnace to provide for the heat needed in the convection section. Pyrolysis capacity is limited by the heat output capabilities of the furnace and efficiency with which that heat is utilized. The ultimate limitation on furnace capacity is the flue gas volume, therefore minimizing the excess oxygen (with the accompanying nitrogen) allows greater capacity for heat generation. Improved heat transfer in both the radiant and convection sections achieved by reducing coke formation will allow total pyrolysis throughput to be increased.

The total energy requirement in the convection section is the sum of the energy required to vaporize the hydrocarbon stream to a desired cutpoint, vaporize and superheat any water used for flash temperature control, superheat the hydrocarbon vapor, and superheat the dilution steam.

One potential source of the heavy hydrocarbon feedstock used in the process of this invention is the bottoms stream from a flash/separation vessel, either recycled from the same flash/separation vessel or from another process train. An advantage of using a bottoms stream from a flash/separation vessel is that a smaller volume of this liquid would be required, reducing pumping requirements, because a higher percentage of this heavy hydrocarbon feedstock would be expected to remain in the liquid phase. While readily available, this source of heavy hydrocarbon feedstock may not provide any significant addition to vapor phase quantities.

## Claims

1. Process for cracking a light hydrocarbon feedstock contaminated with non-volatile components and/or coke precursors, said process comprising:
(a) adding a heavy hydrocarbon feedstock of higher T₅₀ boiling point to the contaminated light hydrocarbon feedstock to form a contaminated hydrocarbon feedstock blend wherein said heavy hydrocarbon feedstock increases the T₉₈ of the contaminated hydrocarbon feedstock blend by at least 28°C (50°F) from the T₉₈ of the contaminated light hydrocarbon feedstock;
(b) heating the contaminated hydrocarbon feedstock blend;
(c) feeding the contaminated hydrocarbon feedstock blend to a flash/separation vessel;
(d) separating the contaminated hydrocarbon feedstock blend into a non-volatile component and coke precursor depleted vapor phase and a liquid phase rich in non-volatile components and/or coke precursors;
(e) removing the vapor phase from the flash/separation vessel; and
(f) cracking the vapor phase in a radiant section of a pyrolysis furnace to produce an effluent comprising olefins, the pyrolysis furnace comprising a radiant section and a convection section

2. Process of claim 1, wherein steam is added at any step or steps prior to step (f).

3. Process of claim 2, wherein the steam is superheated in the convection section of the pyrolysis furnace.

4. Process of any preceding claim, wherein between steps (b) and (c) the contaminated hydrocarbon feedstock blend is heated by indirect contact with flue gas in a first convection section tube bank of the pyrolysis furnace before mixing with a primary dilution steam stream.

5. Process of any preceding claim, wherein steam is added to the vapor phase in the top portion of the flash/separation vessel and/or steam is added to the vapor phase downstream of the flash/separation vessel.

6. Process of any preceding claim, wherein the contaminated hydrocarbon feedstock blend is mixed with a hydrocarbon and/or water fluid in addition to steam prior to step (d).

7. Process of any preceding claim, wherein said heavy hydrocarbon feedstock increases the T₉₅ of the contaminated hydrocarbon feedstock blend by at least 14°C (25°F) from the T₉₅ of the contaminated light hydrocarbon feedstock.

8. Process of any preceding claim, wherein said heavy hydrocarbon feedstock comprises between 2 and 75 wt% of the contaminated hydrocarbon feedstock blend.

9. Process of any preceding claim, wherein the heavy hydrocarbon feedstock comprises one or more of residues, crude oil, atmospheric pipestill bottoms, vacuum pipestill streams including bottoms, heavy non-virgin hydrocarbon streams from refineries, vacuum gas oils, atmospheric residue, low sulfur waxy residue, and heavy residue and/or wherein the contaminated light hydrocarbon feedstock comprises one or more of gas oils, heating oil, jet fuel, diesel, kerosene, gasoline, coker naphtha, steam cracked naphtha, catalytically cracked naphtha, hydrocrackate, reformate, raffinate reformate, Fischer-Tropsch liquids, Fischer-Tropsch gases, natural gasoline, distillate, virgin naphtha, wide boiling range naphtha to gas oil condensates, and heavy gas oil; and further comprises non-volatile components and/or coke precursors.

10. Process of any preceding claim, wherein the heavy hydrocarbon feedstock comprises non-volatile components and/or coke precursors.

11. Process of any preceding claim, wherein step (c) comprises introducing the contaminated hydrocarbon feedstock blend tangentially to the flash/separation vessel through at least one side inlet located in the side of said flash/separation vessel.

12. Process of any preceding claim, wherein the contaminated hydrocarbon feedstock blend is heated by indirect contact with flue gas in a second convection section tube bank of the pyrolysis furnace before step (c).

13. Process of any preceding claim, wherein in step (d) the pressure is from 275 to 1380 kPa (40 to 200 psia) and/or wherein 50 to 98 percent of the contaminated hydrocarbon feedstock blend is in the vapor phase in step (e).

14. Process of any preceding claim, further comprising quenching the effluent and recovering cracked product therefrom.

## Patentansprüche

1. Verfahren zum Cracken eines leichten Kohlenwasserstoff-Einsatzmaterials, das mit nichtflüchtigen Bestandteilen und/oder Koksvorläufern kontaminiert ist, bei dem
(a) ein schweres Kohlenwasserstoff-Einsatzmaterial mit einem höheren T₅₀-Siedepunkt zu dem kontaminierten leichten Kohlenwasserstoff-Einsatzmaterial gegeben wird, um ein kontaminiertes Kohlenwasserstoff-Einsatzmaterialgemisch zu bilden, wobei das schwere Kohlenwasserstoff-Einsatzmaterial den T₉₈-Wert des kontaminierten Kohlenwasserstoff-Einsatzmaterialgemisches um mindestens 28°C (50°F) in Bezug auf den T₉₈-Wert des kontaminierten leichten Kohlenwasserstoff-Einsatzmaterials erhöht;
(b) das kontaminierte Kohlenwasserstoff-Einsatzmaterialgemisch erwärmt wird;
(c) das kontaminierte Kohlenwasserstoff-Einsatzmaterialgemisch in ein Flashtrenngefäß eingespeist wird;
(d) das kontaminierte Kohlenwasserstoff-Einsatzmaterialgemisch in eine nichtflüchtige Komponente und eine Koksvorläufer-abgereicherte Dampfphase und eine flüssige Phase, die reich an nichtflüchtigen Komponenten und/oder Koksvorläufern ist, aufgetrennt wird;
(e) die Dampfphase von dem Flashtrenngefäß entfernt wird und
(f) die Dampfphase in einem Strahlungsabschnitt eines Pyrolyseofens gecrackt wird, um einen Ausstrom herzustellen, der Olefine umfasst, wobei der Pyrolyseofen einen Strahlungsabschnitt und einen Konvektionsabschnitt umfasst.

2. Verfahren nach Anspruch 1, wobei Dampf in einem beliebigen Schritt oder beliebigen Schritten vor Schritt (f) zugeführt wird.

3. Verfahren nach Anspruch 2, wobei der Dampf im Konvektionsabschnitt des Pyrolyseofens überhitzt wird.

4. Verfahren nach einem der vorhergehenden Ansprüche, wobei das kontaminierte Kohlenwasserstoff-Einsatzmaterialgemisch zwischen den Schritten (b) und (c) durch indirekten Kontakt mit Abgas in einer Rohrgruppe des ersten Konvenktionsabschnitts des Pyrolyseofens vor dem Mischen mit einem primären Verdünnungsdampfstrom erwärmt wird.

5. Verfahren nach einem der vorhergehenden Ansprüche, wobei Dampf in dem oberen Abschnitt des Flashtrenngefäßes zu der Dampfphase gegeben wird und/oder Dampf flussabwärts von dem Flashtrenngefäß zu der Dampfphase gegeben wird.

6. Verfahren nach einem der vorhergehenden Ansprüche, wobei das kontaminierte Kohlenwasserstoff-Einsatzmaterialgemisch zusätzlich zu Dampf vor Schritt (d) mit einem Kohlenwasserstoff- und/oder einem Wasserfluid.

7. Verfahren nach einem der vorhergehenden Ansprüche, wobei das schwere Kohlenwasserstoff-Einsatzmaterial den T₉₅-Wert des kontaminierten Kohlenwasserstoff-Einsatzmaterialgemisches um mindestens 14°C (25°F) in Bezug auf den T₉₅-Wert des kontaminierten leichten Kohlenwasserstoff-Einsatzmaterials erhöht.

8. Verfahren nach einem der vorhergehenden Ansprüche, wobei das schwere Kohlenwasserstoff-Einsatzmaterial zwischen 2 und 75 Gew.-% des kontaminierten Kohlenwasserstoff-Einsatzmaterialgemisches umfasst.

9. Verfahren nach einem der vorhergehenden Ansprüche, wobei das schwere Kohlenwasserstoff-Einsatzmaterial eines oder mehrere von Reststoffen, Rohöl, atmosphärischen Rohrdestillierrückständen, Vakuumdestillierströmen einschließlich Rückständen, schweren nicht-unverarbeiteten Kohlenwasserstoffströmen aus Raffinerien, Vakuumgasölen, atmosphärischen Rückständen, wachsartigen Rückständen mit niedrigem Schwefelgehalt und schweren Rückständen umfasst und/oder wobei das kontaminierte leichte Kohlenwasserstoff-Einsatzmaterial eines oder mehrere von Gasölen, Heizölen, Düsentreibstoffen, Diesel, Kerosin, Benzin, Kokernaphtha, dampfgecracktem Naphtha, katalytisch gecracktem Naphtha, Hydrocrackprodukten, Reformat, Raffinatreformat, Fischer-Tropsch-Flüssigkeiten, Fischer-Tropsch-Gasen, natürlichem Benzin, Destillat, unverarbeitetem Naphtha, Kondensaten aus Naphtha mit einem hohen Siedebereich zu Gasöl und schwerem Gasöl umfasst und ferner nichtflüchtige Bestandteile und/oder Koksvorläufer umfasst.

10. Verfahren nach einem der vorhergehenden Ansprüche, wobei das schwere Kohl enwasserstoff-Einsatzmaterial nichtflüchtige Bestandteile und/oder Koksvorläufer umfasst.

11. Verfahren nach einem der vorhergehenden Ansprüche, wobei in Schritt (c) das kontaminierte Kohlenwasserstoff-Einsatzmaterialgemisch tangential in das Flashtrenngefäß durch mindestens einen Seiteneinlass eingebracht wird, der sich an der Seite des Flashtrenngefäßes befindet.

12. Verfahren nach einem der vorhergehenden Ansprüche, wobei das kontaminierte Kohlenwasserstoff-Einsatzmaterialgemisch vor Schritt (c) durch indirekten Kontakt mit Abgas in einer Rohrgruppe des zweiten Konvenktionsabschnitts des Pyrolyseofens erwärmt wird.

13. Verfahren nach einem der vorhergehenden Ansprüche, wobei der Druck in Schritt (d) 275 bis 1380 kPa (40 bis 200 psia) beträgt und/oder wobei 50 bis 98 Prozent des kontaminierten Kohlenwasserstoff-Einsatzmaterialgemisches in Schritt (e) in der Dampfphase vorliegen.

14. Verfahren nach einem der vorhergehenden Ansprüche, wobei ferner der Ausstrom gequencht wird und gecrackte Produkte daraus gewonnen werden.

## Revendications

1. Procédé de craquage d'une charge d'alimentation d'hydrocarbure léger contaminée par des constituants non volatils et/ou des précurseurs de coke, ledit procédé comprenant les étapes consistant à :
(a) ajouter à la charge d'alimentation d'hydrocarbure léger contaminée une charge d'alimentation d'hydrocarbure lourd de point d'ébullition T₅₀ plus élevé pour former un mélange de charge d'alimentation d'hydrocarbure contaminé, ladite charge d'alimentation d'hydrocarbure lourd augmentant la T₉₈ du mélange de charge d'alimentation d'hydrocarbure contaminé d'au moins 28 °C (50 °F) par rapport à la T₉₈ de la charge d'alimentation d'hydrocarbure léger contaminée ;
(b) chauffer ledit mélange de charge d'alimentation d'hydrocarbure contaminé ;
(c) charger le mélange de charge d'alimentation d'hydrocarbure contaminé dans un récipient de détente/séparation ;
(d) séparer le mélange de charge d'alimentation d'hydrocarbure contaminé en une phase vapeur épuisée en constituants non volatils et en précurseurs de coke et une phase liquide riche en constituants non volatils et/ou en précurseurs de coke;
(e) éliminer la phase vapeur du récipient de détente/ séparation ; et
(f) craquer la phase vapeur dans une section de rayonnement d'un four à pyrolyse pour produire un effluent comprenant des oléfines, le four à pyrolyse comprenant une section de rayonnement et une section de convexion.

2. Procédé selon la revendication 1, dans lequel de la vapeur d'eau est ajoutée à n'importe quelle(s) étape(s) précédant l'étape (f).

3. Procédé selon la revendication 2, dans lequel la vapeur d'eau est surchauffée dans la section de convexion du four à pyrolyse.

4. Procédé selon l'une quelconque des revendications précédentes, dans lequel entre les étapes (b) et (c) le mélange de charge d'alimentation d'hydrocarbure contaminé est chauffé par contact indirect avec le gaz d'échappement dans une batterie de tubes de la première section de convection du four à pyrolyse avant son mélange avec un courant de vapeur d'eau de dilution primaire.

5. Procédé selon l'une quelconque des revendications précédentes, dans lequel de la vapeur d'eau est ajoutée à la phase vapeur dans la partie haute du récipient de détente/séparation et/ou de la vapeur d'eau est ajoutée à la phase vapeur en aval du récipient de détente/séparation.

6. Procédé selon l'une quelconque des revendications précédentes, dans lequel le mélange de charge d'alimentation d'hydrocarbure contaminé est mélangé avec un fluide comprenant un hydrocarbure et/ou de l'eau en plus de la vapeur d'eau avant l'étape (d).

7. Procédé selon l'une quelconque des revendications précédentes, dans lequel ladite charge d'alimentation d'hydrocarbure lourd augmente la T₉₅ du mélange de charge d'alimentation d'hydrocarbure contaminé d'au moins 14 °C (25 °F) par rapport à la T₉₅ de la charge d'alimentation d'hydrocarbure léger contaminée.

8. Procédé selon l'une quelconque des revendications précédentes, dans lequel ladite charge d'alimentation d'hydrocarbure lourd constitue entre 2 % en poids et 75 % en poids du mélange de charge d'alimentation d'hydrocarbure contaminé.

9. Procédé selon l'une quelconque des revendications précédentes, dans lequel la charge d'alimentation d'hydrocarbure lourd comprend un ou plusieurs des suivants : résidus, pétrole brut, queues atmosphériques de four de distillation tubulaire, courants de four de distillation tubulaire sous vide y compris queues, courants d'hydrocarbures lourds non vierges provenant de raffineries, gazoles sous vide, résidu atmosphérique, résidu paraffinique à faible teneur en soufre et résidu lourd et/ou dans lequel la charge d'alimentation d'hydrocarbure léger contaminée comprend un ou plusieurs des suivants : gazoles, fuel, carburéacteur, diesel, kérosène, essence, naphta de cokéfaction, naphta vapocraqué, n aphta craqué catalytiquement, produit d'hydrocraquage, produit de reformage, produit de reformage raffiné, liquides de Fischer-Tropsch, gaz de Fischer-Tropsch, essence naturelle, distillat, naphta vierge, produits de condensation de naphta et de gazole de large domaine d'ébullition, et gazole lourd ; et comprend en outre des constituants non volatils et/ou des précurseurs de coke.

10. Procédé selon l'une quelconque des revendications précédentes, dans lequel la charge d'alimentation d'hydrocarbure lourd comprend des constituants non volatils et/ou des précurseurs de coke.

11. Procédé selon l'une quelconque des revendications précédentes, dans lequel l'étape (c) comprend l'introduction du mélange de charge d'alimentation d'hydrocarbure contaminé tangentiellement dans le récipient de détente/séparation par au moins une entrée latérale située dans le côté dudit récipient de détente/séparation.

12. Procédé selon l'une quelconque des revendications précédentes, dans lequel le mélange de charge d'alimentation d'hydrocarbure contaminé est chauffé par contact indirect avec le gaz d'échappement dans une batterie de tubes d'une seconde section de convexion du four à pyrolyse avant l'étape (c).

13. Procédé selon l'une quelconque des revendications précédentes, dans lequel dans l'étape (d) la pression est de 275 à 1380 kPa (40 à 200 psia) et/ou dans lequel 50 à 98 pour cent du mélange de charge d'alimentation d'hydrocarbure contaminé se trouvent en phase vapeur dans l'étape (e).

14. Procédé selon l'une quelconque des revendications précédentes, comprenant en outre le refroidissement brusque de l'effluent et la récupération de produit craqué à partir de celui-ci.
